# EUROPEAN PATENT APPLICATION

(11) **EP 3 506 580 A1**
(43) Date of publication of application: **03.07.2019**
(21) Application number: 17211046.2
(22) Date of filing: 29.12.2017
(51) Int. Cl.: H04L 27/00

(54) **COMMUNICATION DEVICE AND METHOD FOR DETERMINING A FREQUENCY OFFSET**

(71) Applicant: Intel IP Corporation, Santa Clara, CA 95054 (US)
(72) Inventor: MEIXNER, Michael, 81667 Munich (DE); ROTSTEIN, Ron, 6291076 Tel Aviv (IL); SCHULTZ, Christoph, 45130 Essen (DE); MEYER, Stefan, 91315 Höchstadt (DE); HVIID, Jan, 076 9270 Klaruo (DK); AGRAWAL, Kapil, KA 560068 Bangalore (IN)
(74) Representative: Viering, Jentschura & Partner mbB Patent- und Rechtsanwälte

(57) **Abstract**

A communication device is described comprising an oscillator configured to generate a reference frequency; a measurement determiner configured to determine a plurality of measurement pairs, each measurement pair representing a temperature of the oscillator and a frequency offset of the reference frequency; and a frequency offset determiner configured to determine a relation between temperature of the oscillator and frequency offset of the reference frequency over a temperature range based on a least one type of mathematical regression, clean-up of outdated measurement pairs, filtering and weighting of measurement pairs according to their statistical importance and maximum likelihood combination of obtained information based on a priori known statistical data.

## Description

### Technical Field

Exemplary implementations described herein generally relate to communication devices and methods for determining a frequency offset.

### Background

For the reception and transmission of radio signal, a communication device typically needs to be provided with a reference frequency. This reference frequency is usually provided by an oscillator of the communication device. However, oscillators are sensitive to temperature and in modern use cases, temperature changes in a communication device may be quite quick, e.g. due to heat generation by a processor in a smartphone. Accordingly, efficient approaches to estimate frequency errors due to temperature are desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system.
Figure 2 shows components of a mobile terminal.
Figure 3 shows a diagram including an S-curve.
Figure 4 shows a diagram illustrating an association of measurements with bins.
Figure 5 shows a quality indicator (bin counter) for each temperature bin.
Figure 6 shows a flow diagram illustrating a third-order polynomial regression in the presence of constraints.
Figure 7 shows diagrams for illustrating the definition of the delta residual offset between two temperature points
Figure 8 shows components of a communication device.
Figure 9 shows a flow diagram illustrating a method for determining a frequency offset, for example performed by a communication device.

### Description of Exemplary Implementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

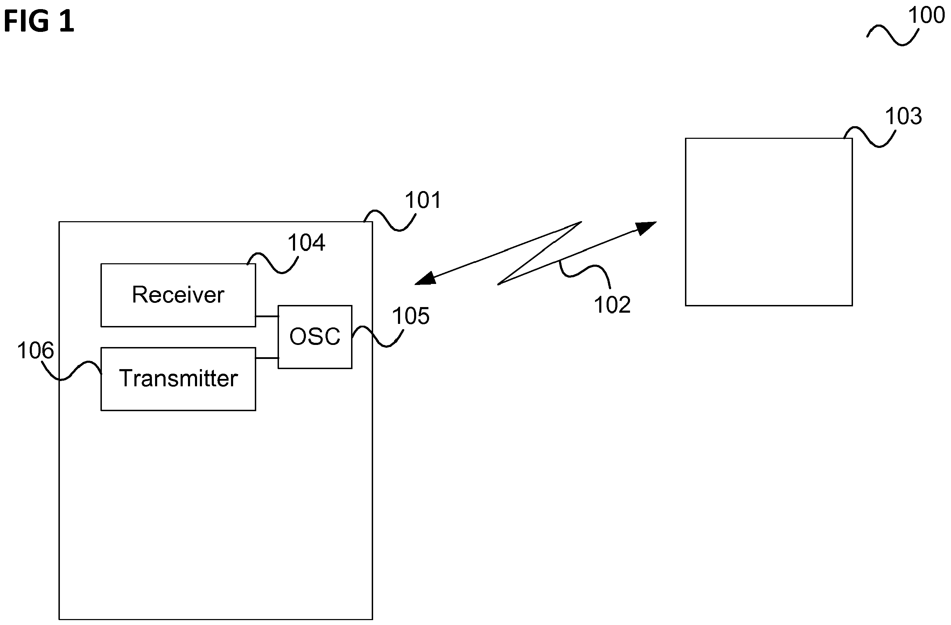

Figure 1 shows a communication system 100.

The communication system 100 includes a mobile terminal 101 which may receive a radio signal 102 from a sender 103. The sender 103 may for example be a base station of a mobile communication network or a satellite of global navigation satellite system (GNSS). For reception, the mobile terminal 101 includes a receiver 104. The radio (frequency) signal 102 is transmitted based on an underlying frequency such as a carrier frequency. The mobile terminal 101 includes an oscillator 105 which provides a reference frequency which is used by the receiver 104 to demodulate the radio signal 102. The mobile terminal 101 may also operate as a sender. In this case, a transmitter 106 of the mobile terminal 101 transmits a radio signal 102 based on the reference frequency.

A communication system suffers from offsets between an underlying frequency of a radio signal 102 and the reference frequency used by a mobile terminal 101. That does not solely apply to fading of the radio channel via which the radio signal is transmitted but also to variations of the reference frequency of the mobile terminal provided by its oscillator which it uses to demodulate the radio signal 102 correctly (or to modulate the radio frequency signal 102 in case the mobile terminal operates as sender). Crystal oscillators, which are typically being used to generate the reference frequency, cause both predictable and unpredictable variations. One dominant, widely predictable effect is the response to the (component) temperature they are operated at.

Knowledge of the so called S-curve, the predictable static frequency error (or offset) of a crystal oscillator as a response to its operating temperature, is of crucial importance for compensating the error originating from that behavior. This is true for low activity use cases (where little information from a communication network is available to support a static frequency error estimation) as well as highly dynamic use cases (where temperature changes very quickly and thus rapid changes of the reference frequency become dominant).

For high temperature dynamics efficient approaches to compensate frequency errors caused by temperature changes are required to achieve a good communication system performance. This may for example include features like VCTCXO (voltage controlled temperature compensated oscillators) VCTCXO or more complex compensation schemes, which can also be dynamically adapted.

In the following, approaches are described to improve (at least to maintain) the communication system performance (e.g. in terms of communication link quality, user experience, data throughput, etc.) in the presence of highly dynamic temperature use cases (i.e. in case of high temperature drift rates). Highly dynamic temperature leads to increased requirements which make inherent mechanisms of the radio access technologies (such as native frequency error estimation based on known correlations, e.g. a training sequence) to automatically correct an offset (AFC (Automatic Frequency Correction)) insufficient. Therefore, the approaches described in the following include additional mechanisms to predict and correct a frequency error accurately which may also involving hybrid combinations of inherent algorithms with additional mechanisms.

Unknown responses of subsystems in a complex device are usually calibrated during the production of the device in order to make them known. This opens up the possibility to compensate for their unwanted behavior as long as it is deterministic. However, the response of a crystal oscillator over temperature and lifetime cannot be fully calibrated due to constraints of time and cost etc. in the manufacturing process. So, according to various approaches as described in the following, a significant portion of the learning (which can be seen as just another word for calibration) is shifted into the operation phase of the device.

In the following an exemplary architecture of a mobile terminal is described which is used as a basis for describing various approaches for frequency error determination and compensation in the following.

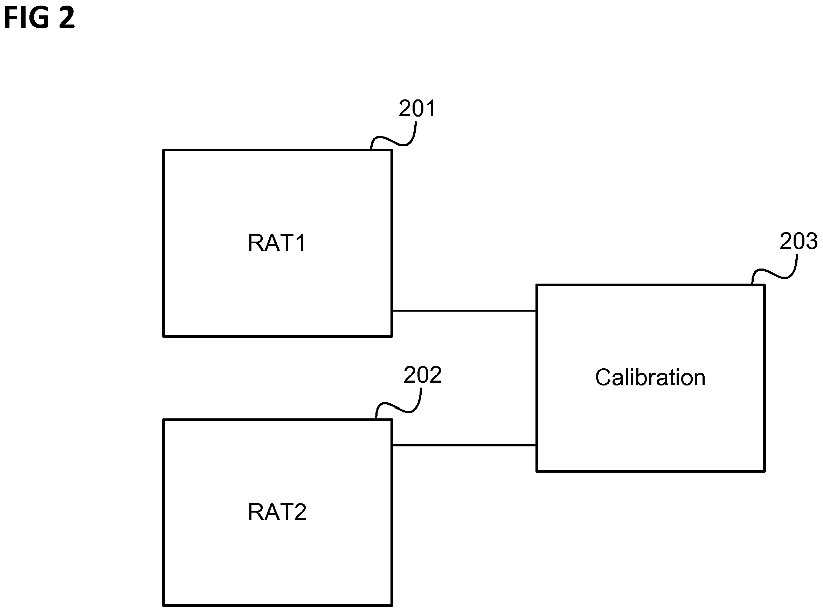

Figure 2 shows components of a mobile terminal 200.

In this example, the mobile terminal 200 includes components for two radio access technologies (RATs). It should be noted that the approaches described below which require only a single RAT may also be applied to a mobile terminal with a single RAT. For example the mobile terminal 200 includes cellular RAT components 201 implementing a cellular subsystem (including a cellular modem) which include functionalities to communicate via a cellular mobile communication radio access technology and GNSS components 202 implementing a GNSS subsystem which include functionalities to receive GNSS signals.

Furthermore, the mobile terminal 200 includes calibration components 203 which calibrates the cellular RAT components 201 and the GNSS components 202. In particular, the calibration components 203 performs frequency offset compensation.

The mobile terminal 200 collects of knowledge related to the temperature-dependency of the frequency error. This includes processing of raw data (i.e. measured pairs of temperature and oscillator frequency) to keep the requirements on storage memory and processing below an acceptable threshold.

In the following examples are described how this obtained knowledge is
- stored (which may include a distinction into calibration data and further learning data)
- merged with newly learned information (e.g. incoming measurements)
- and post-processed over time
in order to mimic the particularities of the underlying physical effects.

This includes the introduction of problem-specific elements in the learning and subsequent compensation of error sources which are matched to the characteristics of the error sources themselves. As a result the performance of the compensation methods can be improved.

The mobile terminal 200 may determine new measurement pairs, i.e. measure measurements temperature-frequency error pairs for example in connected mode, e.g. when it has a connection with a cellular communication network by means of its cellular mobile communication functionalities.

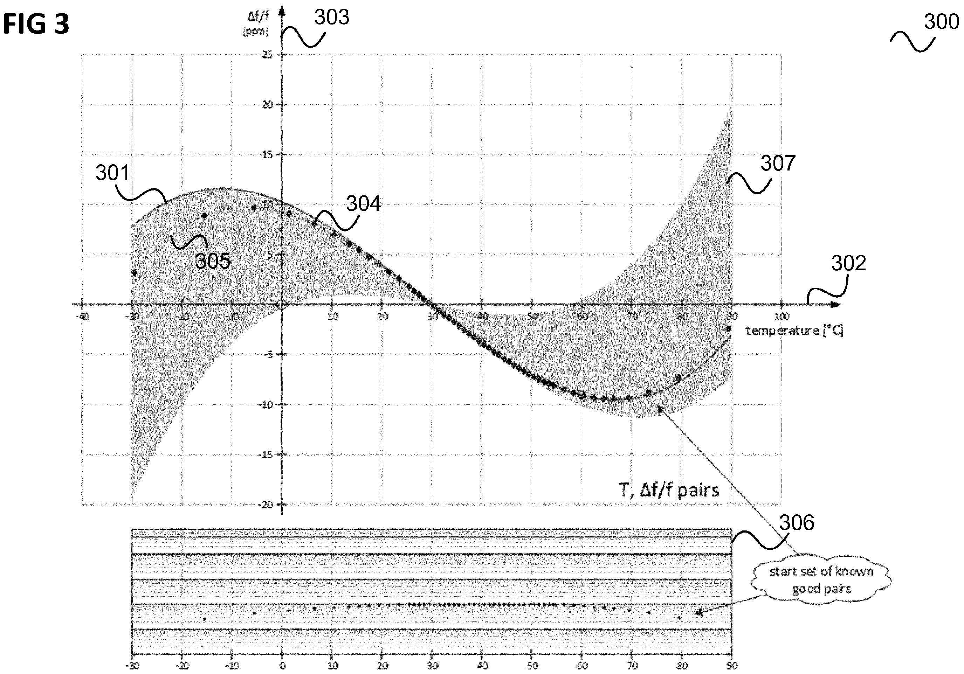

Figure 3 shows a diagram 300 including an S-curve 301.

Temperature increases from left to right along the x-axis 302 and the (relative) frequency error increases with the distance from the x-axis 302 along the y-axis 303.

The x-axis 302, i.e. the temperature axis, is divided into so-called bins, which make up the x-vector of a discrete representation of the S-curve.

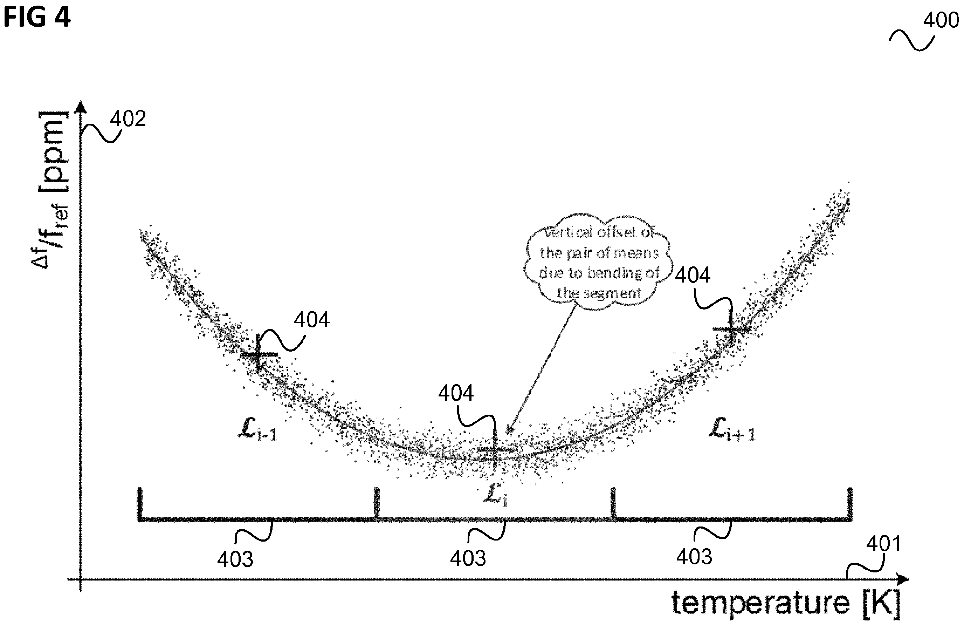

Figure 4 shows a diagram 400 illustrating an association of measurements with bins.

Temperature increases from left to right along the x-axis 401 and the (relative) frequency error increases with the distance from the x-axis 401 along the y-axis 402.

For each of a plurality of windows 403, learned pairs, i.e. measurements of temperature and corresponding frequency error with a temperature falling in the window 403 are collected. Each window 403 thus includes all measurements (represented by the small dots in figure 4) corresponding to a temperature range associated with the window 403. Each window 403 corresponds to a temperature bin. The measurement pairs may for example be stored in the form of a learning array stored in non-volatile memory and for example loaded to mobile terminal RAM (random access memory) upon boot-up of the mobile terminal's cellular modem.

For each window 403, the measurements are condensed into one representation 404, i.e. a temperature-frequency pair, per temperature bin, thus reducing the amount of the data. This approach makes use of the averaging of a possibly high amount of learned pairs in the temperature window 403. Additional error sources like Doppler of a particular radio link or base station frequency offset are also averaged out by this approach at the same time. An S-curve can then be fit to the representations 404 which may for example correspond to dots 304 of figure 4.

Each temperature bin may be provided with a quality indicator which indicates how reliable its information is. The mobile terminal 200 may take this quality indicator into account to decide how predominantly the information of a temperature bin shall be used in, e.g. the frequency error compensation. For example, a bin counter N_{Bin} (i.e. how many separate measurement pairs have been considered in the past for the current frequency-temperature pair representation 404) may be used for the purpose of this quality indicator. The quality indicators may for example be used to perform a weighted polynomial regression to generate the S-curve from the frequency-temperature pair representations 404. For example, a frequency-temperature pair representation 404 may have a higher weight in the regression and thus have higher impact on the resulting S-curve the higher its quality indicator is. The mobile terminal 202 may also decide based on the quality indicator about the impact of a new measurement on the current frequency-temperature pair representation 404, i.e. for balancing the current frequency-temperature pair representation 404 with a new input. Thus, for each bin, the mobile terminal 200 may use an adaptive learning behavior which follows newly incoming information fast and rather directly at the beginning and slowly and reluctantly once a significant amount of information had been obtained already. This can be compared with a time-independent Kalman filter. For example, an IIR (infinite input response) filter with adaptive weighting may be chosen for the implementation, wherein the weighting factor for a newly incoming measurement vs the frequency-temperature pair representation 404 is determined based on the bin counter, e.g. as 1/N_{Bin}.

A maximum limit (e.g. 1/N_{BinMax}) may be introduced for the weighting factor to avoid that the learning behavior of each bin falls behind the aging rate of the crystal. In other words, the learning may take aging of the crystal into account. The learning may include a sequence of S-curve determinations (in general determinations of the relation between frequency error of the oscillator and temperature) and may, from one determination to the next, remove or ignore outdated measurement pairs (or at least reduce their impact by corresponding weighting) to take aging into account.

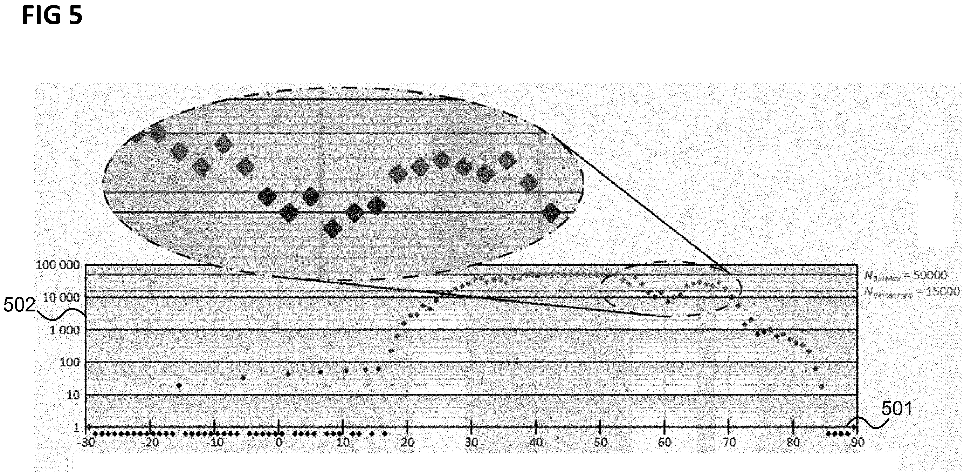

Figure 5 shows a quality indicator (bin counter) for each temperature bin. As in figure 3, temperature increases from left to right along a temperature axis 501. The bin counter increases from bottom to top along a (logarithmic) count axis 502.

An 11R filter may be used to handle the numerical challenges of high bin counter values, e.g. in a software implementation.

The mobile terminal 200 may use particular means to assign a pre-defined quality label to temperature bins lying in certain temperature regions, of which the reliability is known to be different from others. This is e.g. applied for calibration data as indicated in figure 3, where, as shown in the bottom diagram 306, a synthetic initial bin counter is assigned to each bin. The calibration data are for example the frequency-temperature pair representations determined as initial values before new measurements are considered, i.e. as initial values for the learning process. The calibration data may for example be based on lab measurements and models for the behavior of the mobile terminal's oscillator. The dots 304 may for example correspond to frequency-temperature pair representations based on the calibration data and may evolve (change their vertical position in the diagram 300) and new frequency-temperature pair representations may be filled in during the learning process when new measurements come in. When the data represented by the dots 304 improves over time, the dots 304 and the polynomial fit 305 based on the dots converges to the true S-curve 301.

As can be seen, the synthetic bin counter values are used for the calibration data with higher rating in the middle and lower rating at the temperature edges.

In the example of figure 3, the frequency-temperature pair representations are thinned at the edges of the considered temperature region, i.e. there may be temperature bins where there is no initial frequency-temperature pair representation.

When a clean-up is performed, at least the initial values are kept. This allows keeping that part of the knowledge even after numerous runs of a clean-up function (as described below) and allows defining the general clean-up routine less aggressively.

The mobile terminal 200 may maintain (e.g. adjust or update) the quality labels during operation, i.e. during the learning process. For example, a clean-up function may reduce the trust into each bin (i.e. reduces the bin counter values) across the board in order to fade out previously learned information which is known to be subject to aging but which is for various reasons not experiencing any further learning. In particular, the clean-up function may reduce the weight of calibration data which gets outdated.

Additional constraints may be imposed on that clean-up process, e.g. to avoid that information vanishes completely since despite the aging of the oscillator (e.g. its crystal) inaccurate information is typically better than no information at all. For example, a multiplication with a factor of e.g. 0.74 may be used for the implementation in order to finally converge to a bin counter value of 1 (i.e. no bin that has experienced at least one learning in the past will ever disappear). The criteria for triggering such a clean-up control the speed of forgetting (speed of removal/ignoring of outdated measurement pairs) and may be aligned with the expected maximum aging rate.

Newly learned information (measurement pairs) are transformed into a dedicated output format of the accumulated knowledge.

This may include categorization of data according to their learning states, applying different approaches to utilize data and combining these into a convenient format for (e.g. software) implementation in order to make the best and efficient use of the obtained information. In other words, obtained knowledge may be adaptively utilized according to the distribution of quality which may allow an improvement of the performance of the frequency compensation.

Individual elements (temperature bins) of the complete, learned knowledge may be categorized and it is indicated how well they have been learned and how reliably their information can be used by means of a (binary) learning indicator. The bin counter (specifying how many learning events have occurred in a particular temperature bin) is used as criterion for the learning indicator. For example, information for a bin may only be considered for the regression when its bin count is above a certain value, e.g. 10000.

Groups of elements (i.e. several temperature bins) may be categorized into learning zones with the intention of applying different algorithms on larger subranges of the underlying elements (bins). The main intention of wider zones is to have only few transition points and to avoid jumps between ranges where different approaches are used for inter- and extrapolation.

A hybrid output representation of the learned knowledge may be created involving a smart merge of approaches from directly used elements mathematically post processed data, e.g. polynomial regression or spline interpolation using the learning zones as criteria for selection of a suitable approach.

The knowledge, i.e. measurement pairs of temperature and frequency error are fit to an a priori given characteristic of the unknown temperature response of the mobile terminal's oscillator. In the following, an example is described where a polynomial regression is used. The fitting is performed during calibration and repeatedly during the learning process.

By the condensing of measurements into bin representations 404 and the following fitting of an approximated S-curve 305 to the representations 404, obtained knowledge is transferred from a raw data format into a simplified and dedicated representation. This may be based on characteristics that the underlying behavior is known to have (i.e. an increase of frequency error in certain temperature regions and a decrease in others) and known restrictions of these elements, known by design, specification or other sources of information.

For example, an oscillator manufacturer may specify that the S-curve, according to product specifications, has to lie within the highlighted region 307 of the diagram 300.

The mobile terminal 200 may interpret any deviation, which cannot be mapped to the characteristic elements within the constraints, to be data contamination and filter it out. This may be particularly important if the total amount of obtained knowledge is small (or small in certain temperature regions) so that the averaging has not done a good job yet to filter out Doppler, etc. and may result in an improvement of the performance of the compensation methods.

According to one approach, a polynomial fit algorithm is applied to a set of discrete frequency-temperature pairs 304, 404 generated from measurements in order to calculate a polynomial representation 305 of an S-curve of the mobile terminal's oscillator. For example, a 3^{rd} order or a 5^{th} order polynomial may be used but there is no restriction to that. Depending on the degrees of freedom of the polynomial fit, the approximate polynomial S-curve 305 is closer to or further from the true S-curve 301.

it should be noted that although the following is explained on the basis of an S-curve and a polynomial representation, it is equally applicable to any other form of curve and any other set of characteristic elements to which given data should be fitted to.

The polynomial fit 305 is determined by means of a polynomial regression. The quality labels of the bins (e.g. bin counters) may be used as an input for a weighted mathematical regression. By this, the likelihood of a better representation of the true S-curve after the regression is increased. This is particularly true for a temperature region in which a lot of knowledge has been obtained and the quality labels are very high, accordingly. However, that also increases the risk that a high amount of knowledge in a (small) local temperature region which concentrates on rather small portions of the targeted temperature range has the potential of driving the mathematical regression into extremes. The result may be a very good fit for the local area but a very poor representation across the overall temperature range.

During the regression process, constraints may be introduced such as constraints limiting the possible resulting approximate polynomial S-curve 305 to the highlighted area 307, e.g. in accordance with manufacturer specifications.

The constraints may restrict the fitting parameters, e.g. coefficients c₀, c₁, c₂, c₃ in case of a third-order polynomial, to stay within a controlled range (e.g. known per specification).

Taking constraints into account may include implementing a strategy to judge and constrain fitting parameters from highest impact to lowest impact. At first, only the highest impact fitting parameter are constrained to allow realistic regressions on all other fitting parameters (including those that were outside their limits in the first place). If a fitting parameter needs to be limited to meet a constraint, it is frozen and the other (non-frozen) parameters are re-calculated.

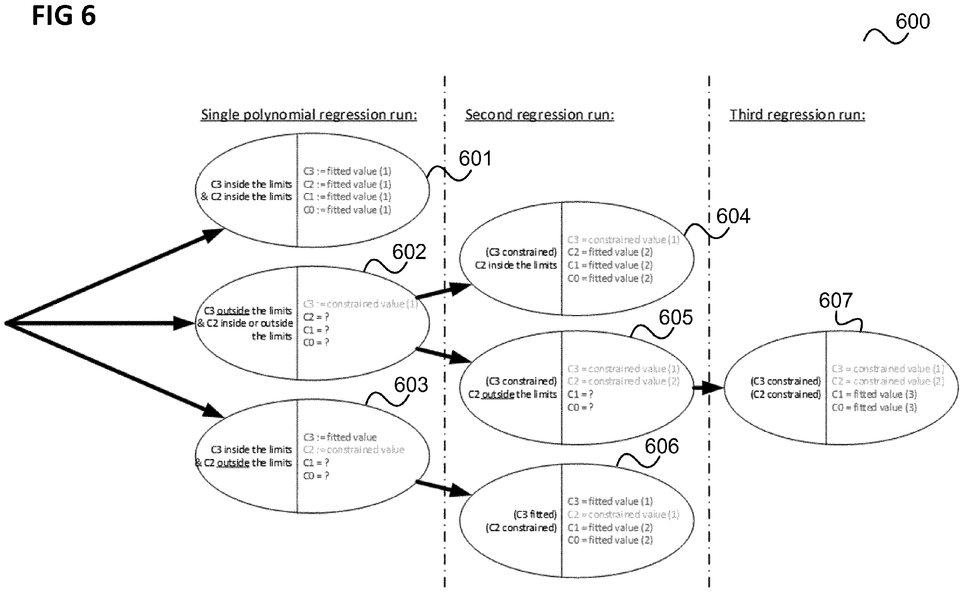

Figure 6 shows a flow diagram 600 illustrating a third-order polynomial regression in the presence of constraints.

After a first regression run, there are three states 601, 602, 603 corresponding to whether the highest impact fitting parameters c₃ and c₂ (i.e. the two coefficients of the polynomial corresponding to exponents 3 and 2) are inside their limits or not.

Assuming as an example the second state 602 where c₃ is outside its limits (and irrespective of whether c₂ is inside or outside its limits), c₃ is set and frozen to its nearest limit and a second regression run is performed which results in c₂ being inside its limits (fourth state 604) or outside its limits (fifth state 605). If c₂ is outside its limits, it is set and frozen to its nearest limit and a third regression run is performed leading to a seventh state 607.

if after the first regression run, c₃ is inside its limits but c₂ is not, C3 is kept at its fitted value, c₂ is set and frozen to its nearest limit and a second regression run is performed for C1 and C0 leading to a sixth state 606.

If there are not constraints for c₀ and c₁, their values may be used as determined in the last regression run which results in a c₃ and c₂ being within their limits (possibly due to them being frozen), i.e. states 601, 604, 606 and 607. If there are constraints for c₀ or c₁ or both, further regression runs may be performed in an analogous manner as for c₃ and c₂.

As an alternative to the approach an example of which is shown in figure 6 for taking into account constraints, the method of ridge regression may be used, accounting for the knowledge about distribution of the coefficients in a maximum likelihood way.

The polynomial fitting may for example be performed once per day or may be performed at boot-up of the cellular modem. Accordingly, a representation of the fitting polynomial may be stored in the mobile terminal's main memory (RAM).

It should be noted that the polynomial regression is only an example of a mathematical regression and other output formats of the transformed (or processed) measurements may be used, e.g. a spline fit or a piecewise linear fit. Furthermore, a look-up table may be generated (and e.g. stored in the mobile terminal's main memory) which stores for each temperature (or small ranges of temperatures) an expected frequency error. Such a look-up table may be generated based on the result of the fitting (regression) procedure.

Particular pieces of obtained information may be leveraged in various ways and according to their origin as described in the following.

Information may be categorized according to systematic quality and expected accuracy and leveraged in a situation-specific manner, e.g. depending on the most important criterion at a given point in time (e.g. according to "little information is better than no in information").

In particular, information may be used in a non-constant manner. As a result the performance of frequency error compensation may be improved across a variety of use cases.

Specifically, data structures (in non-volatile memory of RAM) may be created in a way that allows to easily pick information from different sources or to combine them in a controlled way. This may include duplicating the learning array (containing temperature bins with information for the particular temperatures each) such that it is present in the cellular subsystem and in the GNSS subsystem as GNSS learning array. The cellular subsystem and the GNSS subsystem may perform individual learning.

Furthermore, available information from the two (or possibly more) subsystems may be combined by applying different approaches which may include copy information to a subsystem from another subsystem where the subsystem has no or little information (e.g. a bin with no measurements), copying and merging information from different subsystems according to a given weighting scheme or even overwrite data (e.g. measurement data) of a subsystem by data from another subsystem completely.

Available information may be combined from two (or more) subsystems by applying different criteria which may include taking into account general quality labels of the various subsystems, particularly reported quality label of the various subsystems and reported quality labels of particular bins in the various subsystems.

In this context, quality may refer to different aspects, such as accuracy at the time of obtaining the information, accuracy as defined by the Radio Access Technology as such (e.g. GNSS is known to deliver much more accurate frequency error estimations compared to cellular standards) and timeliness of data (in contrast to data which has been subject to aging for a while).

In particular for polynomial regression, data of two (or more subsystems) may be combined by simply adding up their databases (which leads to two data pairs per temperature bin with individual weighting factors) and feeding the superset into the weighted polynomial fitting process.

A quality label may be assigned to the origin of information and an according weighting factor may be applied when adding a piece of information into the memory, e.g. when it turns out that one subsystem (e.g. according to a certain RAT) is significantly more reliable than one or more others.

As described above, a 1/N_{Bin} weighting of newly incoming data may be implemented which essentially reduces the weight of new data based on the count of already existing data. This weighting factor can be further scaled in order to assign different impact to the different sources. For example, new learnings based on communication with a 2G communication network could be assigned less impact because 2G base stations are known to be rather inaccurate compared to other RATs.

The quality label can already be applied during the recording of data (e.g. measurements).

It should be noted that the quality labels discussed above are not referring to the quality indicator (or quality zones) for bins such as the bin counter as quality measure. They may instead be introduced to account for an intentional weighting of different subsystems (like 2G, 4G, GNSS, ...).

In the following, approaches for the derivation and usage of an expected residual frequency offset depending on the state of the S-Curve approximation 305 in the mobile terminal 200 are described. The residual frequency offset is important for all radio access technologies as it defines how big the frequency capture range after e.g. an idle period needs to be and thus directly influences the required synchronization activities. The better and smaller the residual offset is, the shorter the synchronization sequence can be and thus the power consumption can be reduced.

According to various approaches, the S-Curve learning state, expected/predicted temperature drift as well as predicted temperature ramp behavior are included in the calculation of the expected residual frequency offset. This further narrows done the residual frequency offset and enables additional power savings when coupled to the RAT behavior.

In the following approaches are described for predicting the relative residual frequency offset to be expected for a RAT (e.g. by the cellular transceiver of the GNSS receiver of the mobile terminal 200) after a given time-period (sleep period). Input for the prediction from the respective RAT component (e.g. from the respective transceiver or receiver) is at least the sleep duration as well as the current temperature.

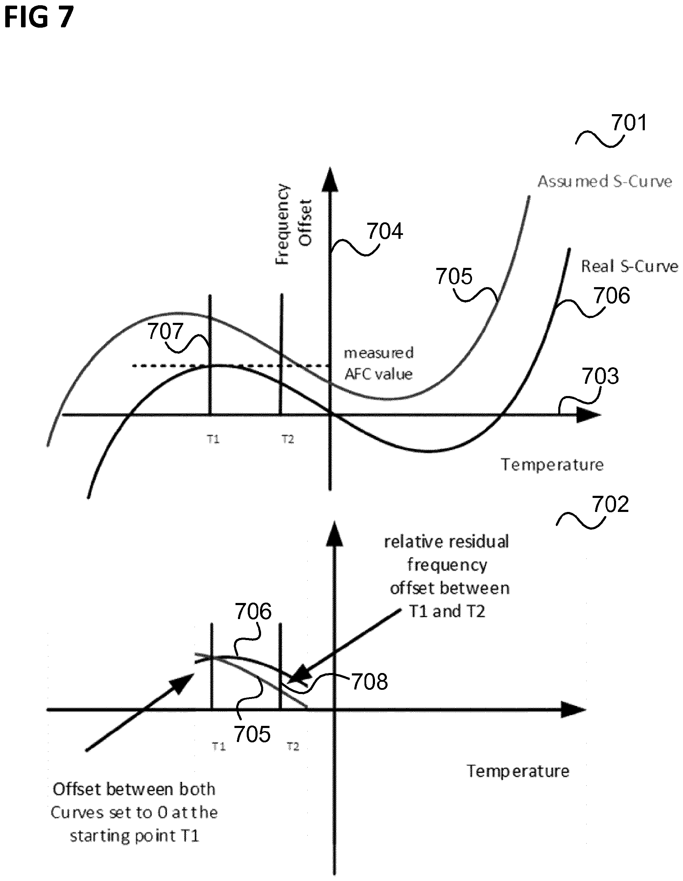

Figure 7 shows diagrams 701, 702 for illustrating the definition of the delta residual offset between two temperature points.

In both diagrams 701, 702, temperature increases from left to right in accordance with a respective x-axis and the frequency offset increases from bottom to top along a respective frequency axis 704.

In Figure 7, an example of the usage of the information gained about the dependency of the frequency offset from temperature is illustrated. In particular, a RAT subsystem is normalized based on a norming to an S-curve and based on taking its change over temperature into account. This allows eliminating offsets in the RAT system (e.g. caused by Doppler effect).

In the first diagram 701, an assumed S-curve 705 and a real S-curve 706 are shown. At a first temperature T1, a frequency offset (based on which an automatic frequency offset correction (AFC) value may be generated) is measured, which is in accordance with the real S-Curve 706. The assumed S-curve 705, however, lies, at the first temperature T1, above the real S-curve by an offset 707.

When the assumed S-curve 705 is shifted downwards by the offset 707, the situation of the second diagram 702 arises where the assumed S-curve 705 and the real S-curve 706 (both only shown partially in the second diagram 702) coincide at the first temperature T1 but have an offset 708 at the second temperature T2. This offset 708 at the second temperature is referred to as the relative (or delta) residual (frequency) offset between T1 and T2.

Thus, the derivation of the relative residual offset i.e. the accuracy of the difference between two frequency correction points (at temperatures T1 and T2) is split into two parts. At first the to-be expected temperature difference (e.g. between the temperature when entering sleep mode and exiting the sleep mode, i.e. sleep duration) is estimated. This is done by taking the expected real life temperature ramp into account.

This can be done by means of simulations of thermal surroundings and using a worst case use case model (i.e. exponential increase or decay) based on a worst case use case. Thus the thermal difference for a given ramp is typically much smaller than a linear prediction.

As mentioned above in context of figure 5, the temperature range and accordingly the S-curve may be split into several zones, e.g. according to the bin values or bin counter values or according to neighboring bins (e.g. bin values or bin counter values of neighboring bins). Each zone may be complemented with a given relative residual frequency offset per time instance. The relative frequency accuracy per zone (ppm/K * average temp gradient) is for example derived empirically (e.g. based on measurements on a set of crystal samples) and is multiplied with the sleep duration to get the value for the relative frequency error. This is an approximation however it avoids that time consuming calculations need to be done.

Secondly, the overall relative frequency error for a given temperature difference may now be derived by checking all temperature points that are in the range between the start time and the end time (e.g. of a sleep period) for their zone and using the worst zone coefficients to calculate the overall relative frequency offset. In this case the negative and positive temperature ramp is considered.

In case the residual frequency offset cannot be handled the RAT component may choose to
▪ Wake-up before and do an additional cell search of synchronization procedure;
▪ Wake-up with an adapted set of receiver parameters capable of handling bigger frequency drifts;
▪ Wake-up in between the inactivity periods to resynchronize with the NW and reduce the relative residual frequency offset;
▪ Risk to lose the paging (assuming that the worst case will not happen) but prepare for a recovery procedure in case the sync is lost.

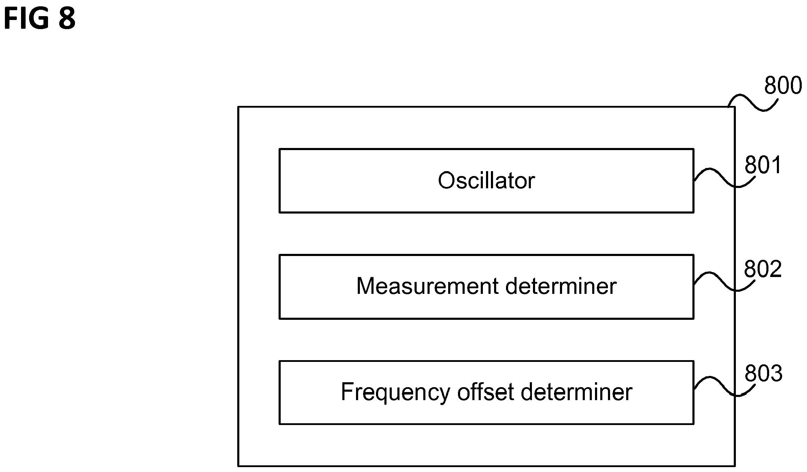

In summary, according to various examples, a communication terminal is provided as illustrated in figure 8.

Figure 8 shows a communication device 800.

The communication device 800 includes an oscillator 801 configured to generate a reference frequency and a measurement determiner 802 configured to determine a plurality of measurement pairs, each measurement pair representing a temperature of the oscillator and a frequency offset of the reference frequency.

The communication device 800 further includes a frequency offset determiner 803 configured to determine a relation between temperature of the oscillator and frequency offset of the reference frequency over a temperature range based on a least one type of mathematical regression, clean-up of outdated measurement pairs, filtering and weighting of measurement pairs according to their statistical importance and maximum likelihood combination of obtained information based on a priori known statistical data.

According to various examples, in other words, a mobile terminal generates an S-curve (or a similar representation of a relation between temperature of the oscillator and frequency offset of the reference frequency over a temperature range) based on one or a combination of type of mathematical regression, clean-up of outdated measurement pairs, filtering and weighting of measurement pairs according to their statistical importance and maximum likelihood combination of obtained information based on a priori known statistical data. These measures address specific effects in the frequency offset determination. For example, the clean-up addresses the aging of the oscillator and thus the aging of the measurement pairs (since they lose validity over time with the aging of the oscillator). The weighting may allow to increase the impact of certain measurement pairs, for example increase the impact of information provided by a base station (i.e. network feedback) when its information can be expected to be reliable.

It should be noted that the mathematical regression, clean-up of outdated measurement pairs, filtering and weighting of measurement pairs according to their statistical importance and maximum likelihood combination of obtained information based on a priori known statistical data may be interwoven. For example, outdated measurement pairs may be cleaned-up by assigning a low weight and the weights may be weights given to temperature-frequency error pairs to which a curve is fit. The curve may be fit by minimizing a cost function wherein a deviation of the fit curve from a temperature-frequency error pair that has a lower weight costs less and a deviation of the fit curve from a temperature-frequency error pair that has a higher weight costs more.

The a priori known statistical data may for example include characteristics (e.g. coefficients) of the oscillator which are known from the oscillator's specification and which are taken into account in the maximum likelihood combination (e.g. in form of a ridge regression).

The oscillator is for example a crystal oscillator.

The frequency offset determiner 803 may determine the relation based on a maximum likelihood approach, for example may determine an S-curve such that the probability, that the measurement pairs arise, is maximum.

The determination of the relation, e.g. the determination of the coefficients of a fitting curve, may take deviations of the coefficients from standard values into account. For example, there may be a penalty in the cost function if a coefficient deviates from a predetermined standard value of the coefficient depending on the magnitude of the deviation. This penalty may be weighted relative to the error between the deviation of the fitting curve and measured values to create a total error which is minimized. Expected statistical values may be based on characteristics of the oscillator.

The communication device (e.g. the measurement determiner and the frequency offset determiner) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially be implemented by a transceiver may for example be at least partially implemented by a modem (e.g. an LTE modem), a baseband processor or other transceiver components or also by an application processor. The communication device may for example be a communication terminal such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc.

Alternatively, the communication device may be a network component such as a base station or an access point.

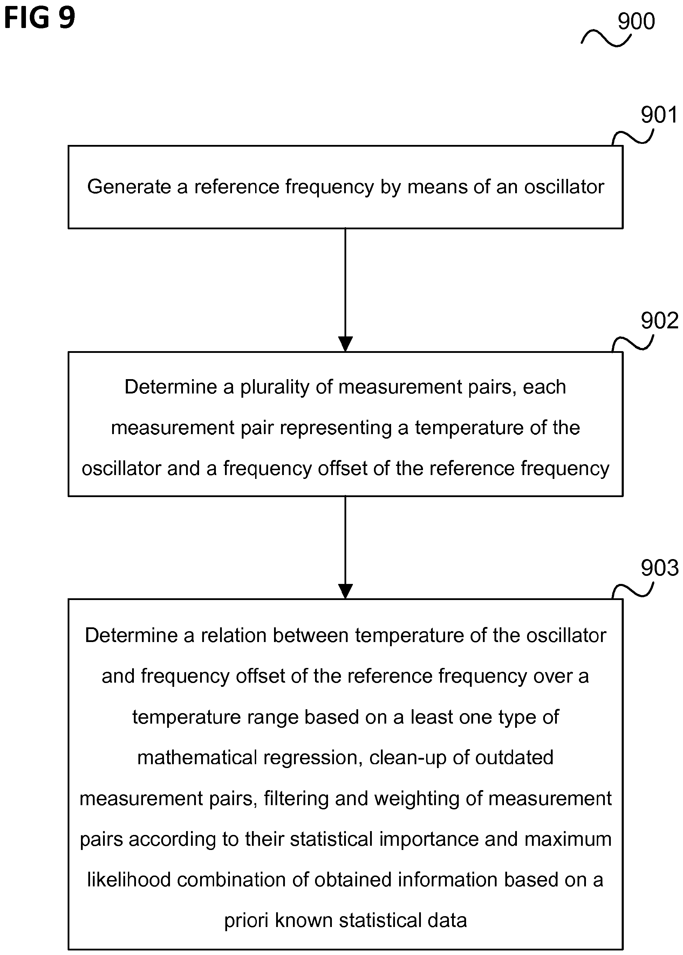

The communication device 800 for example carries out a method as illustrated in figure 9.

Figure 9 shows a flow diagram 900 illustrating a method for determining a frequency offset, for example performed by a communication device.

In 901, the communication device generates a reference frequency by means of an oscillator.

In 902, the communication device determines a plurality of measurement pairs, each measurement pair representing a temperature of the oscillator and a frequency offset of the reference frequency.

In 903, the communication device determines a relation between temperature of the oscillator and frequency offset of the reference frequency over a temperature range based on a least one type of mathematical regression, clean-up of outdated measurement pairs, filtering and weighting of measurement pairs according to their statistical importance and maximum likelihood combination of obtained information based on a priori known statistical data.

The following examples pertain to further exemplary implementations.
Example 1 is a communication device as illustrated in figure 8.
In Example 2, the subject-matter of Example 1 may optionally include a weighter configured to weight each measurement pair based on a reliability of a source of the measurement pair.
In Example 3, the subject-matter of Example 2 may optionally include the source being calibration data or local measurement of a frequency offset by the mobile terminal.
In Example 4, the subject-matter of any one of Examples 1 to 3 may optionally include a weighter configured to weight each measurement pair based on a time period that has elapsed since the determination of the measurement pair.
In Example 5, the subject-matter of Example 4 may optionally include the weighter being configured to weight outdated measurement pairs lower than newer measurement pairs to reduce the impact of the outdated measurement pairs on the determination of the relation.
In Example 6, the subject-matter of any one of Examples 1 to 5 may optionally include the frequency offset determiner being configured to determine the relation based on a mathematical regression and the mathematical regression including determining coefficients of a curve modelling the relation between temperature of the oscillator and frequency offset of the reference frequency over the temperature range.
In Example 7, the subject-matter of Example 6 may optionally include determining the coefficients including taking deviations of the coefficients from standard values into account.
In Example 8, the subject-matter of Example 7 may optionally include the standard values being based on characteristics of the oscillator.
In Example 9, the subject-matter of any one of Examples 1 to 8 may optionally include the frequency offset determiner being configured to, for a plurality of temperature windows of the temperature range, condensing measurement pairs whose temperatures fall into a temperature window to a frequency offset value for that temperature window.
In Example 10, the subject-matter of Example 9 may optionally include condensing the measurement pairs whose temperature falls into the temperature window to the frequency offset value including weighted filtering of the measurement pairs.
In Example 11, the subject-matter of Example 10 may optionally include the weighted filtering including weighting the measurement pairs based on the number of already existing measurement pairs whose temperature falls into the temperature window.
In Example 12, the subject-matter of any one of Examples 9 to 11 may optionally include condensing the measurement pairs whose temperature falls into the temperature window to the frequency offset value including reducing the impact of outdated measurement pairs on the frequency offset value.
In Example 13, the subject-matter of Example 9 may optionally include the mathematical regression being a weighted regression wherein each frequency offset value being weighted based on the number of measurement pairs condensed to the frequency offset value.
In Example 14, the subject-matter of any one of Examples 1 to 13 may optionally include a frequency offset compensator configured to compensate a frequency offset based on the relation between temperature of the oscillator and frequency offset of the reference frequency over the temperature range.
In Example 15, the subject-matter of any one of Examples 1 to 14 may optionally include an accuracy estimator configured to generate, for at least one temperature of the temperature range, an indication of the accuracy of the relation between temperature of the oscillator and frequency offset of the reference frequency for the temperature.
In Example 16, the subject-matter of any one of Examples 1 to 15 may optionally include the measurement determiner being configured to determine the measurement pairs based on communication by means of at least one radio access technology.
In Example 17, the subject-matter of any one of Examples 1 to 16 may optionally include the measurement determiner being configured to determine at least some of the measurement pairs based on communication by means of a first radio access technology and at least some of the measurement pairs based on communication by means of a second radio access technology.
In Example 18, the subject-matter of Example 17 may optionally include a weighter configured to weight each measurement pair based on a weight of a radio access technology based on which it was determined.
In Example 19, the subject-matter of any one of Examples 1 to 18 may optionally include a frequency offset estimator configured to estimate a relative frequency offset based on the relative change of the temperature and the relation between temperature of the oscillator and frequency offset of the reference frequency over the temperature range.
Example 20 is a method for determining a frequency offset as illustrated in figure 9.
In Example 21, the subject-matter of Example 20 may optionally include weighting each measurement pair based on a reliability of a source of the measurement pair.
In Example 22, the subject-matter of Example 21 may optionally include the source being calibration data or a local measurement of a frequency offset.
In Example 23, the subject-matter of any one of Examples 20 to 22 may optionally include weighting each measurement pair based on a time period that has elapsed since the determination of the measurement pair.
In Example 24, the subject-matter of Example 23 may optionally include weighting outdated measurement pairs lower than newer measurement pairs to reduce the impact of the outdated measurement pairs on the determination of the relation.
In Example 25, the subject-matter of any one of Examples 20 to 24 may optionally include determining the relation based on a mathematical regression and the mathematical regression including determining coefficients of a curve modelling the relation between temperature of the oscillator and frequency offset of the reference frequency over the temperature range.
In Example 26, the subject-matter of Example 25 may optionally include determining the coefficients including taking deviations of the coefficients from standard values into account.
In Example 27, the subject-matter of Example 26 may optionally include the standard values being based on characteristics of the oscillator.
In Example 28, the subject-matter of any one of Examples 20 to 27 may optionally include condensing, for a plurality of temperature windows of the temperature range, measurement pairs whose temperatures fall into a temperature window to a frequency offset value for that temperature window.
In Example 29, the subject-matter of Example 28 may optionally include condensing the measurement pairs whose temperature falls into the temperature window to the frequency offset value including weighted filtering of the measurement pairs.
In Example 30, the subject-matter of Example 29 may optionally include the weighted filtering including weighting the measurement pairs based on the number of already existing measurement pairs whose temperature falls into the temperature window.
In Example 31, the subject-matter of any one of Examples 28 to 30 may optionally include condensing the measurement pairs whose temperature falls into the temperature window to the frequency offset value including reducing the impact of outdated measurement pairs on the frequency offset value.
In Example 32, the subject-matter of Example 28 may optionally include the mathematical regression being a weighted regression wherein each frequency offset value being weighted based on the number of measurement pairs condensed to the frequency offset value.
In Example 33, the subject-matter of any one of Examples 20 to 32 may optionally include compensating a frequency offset based on the relation between temperature of the oscillator and frequency offset of the reference frequency over the temperature range.
In Example 34, the subject-matter of any one of Examples 20 to 33 may optionally include generating, for at least one temperature of the temperature range, an indication of the accuracy of the relation between temperature of the oscillator and frequency offset of the reference frequency for the temperature.
In Example 35, the subject-matter of any one of Examples 20 to 34 may optionally include determining the measurement pairs based on communication by means of at least one radio access technology.
In Example 36, the subject-matter of any one of Examples 20 to 35 may optionally include determining at least some of the measurement pairs based on communication by means of a first radio access technology and at least some of the measurement pairs based on communication by means of a second radio access technology.
In Example 37, the subject-matter of Example 36 may optionally include weighting each measurement pair based on a weight of a radio access technology based on which it was determined.
In Example 38, the subject-matter of any one of Examples 20 to 37 may optionally include estimating a relative frequency offset based on the relative change of the temperature and the relation between temperature of the oscillator and frequency offset of the reference frequency over the temperature range.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication device comprising:
an oscillator configured to generate a reference frequency;
a measurement determiner configured to determine a plurality of measurement pairs, each measurement pair representing a temperature of the oscillator and a frequency offset of the reference frequency;
a frequency offset determiner configured to determine a relation between temperature of the oscillator and frequency offset of the reference frequency over a temperature range based on a least one type of mathematical regression, clean-up of outdated measurement pairs, filtering and weighting of measurement pairs according to their statistical importance and maximum likelihood combination of obtained information based on a priori known statistical data.

2. The communication device of claim 1, comprising a weighter configured to weight each measurement pair based on a reliability of a source of the measurement pair.

3. The communication device of claim 2, wherein the source is calibration data or a local measurement of a frequency offset by the mobile terminal.

4. The communication device of any one of claims 1 to 3, comprising a weighter configured to weight each measurement pair based on a time period that has elapsed since the determination of the measurement pair.

5. The communication device of claim 4, wherein the weighter is configured to weight outdated measurement pairs lower than newer measurement pairs to reduce the impact of the outdated measurement pairs on the determination of the relation.

6. The communication device of any one of claims 1 to 5, wherein the frequency offset determiner is configured to determine the relation based on a mathematical regression, wherein the mathematical regression comprises determining coefficients of a curve modelling the relation between temperature of the oscillator and frequency offset of the reference frequency over the temperature range.

7. The communication device of claim 6, wherein determining the coefficients comprises taking deviations of the coefficients from standard values into account.

8. The communication device of claim 7, wherein the standard values are based on characteristics of the oscillator.

9. The communication device of any one of claims 1 to 8, wherein the frequency offset determiner is configured to, for a plurality of temperature windows of the temperature range, condensing measurement pairs whose temperatures fall into a temperature window to a frequency offset value for that temperature window.

10. The communication device of claim 9, wherein condensing the measurement pairs whose temperature falls into the temperature window to the frequency offset value comprises weighted filtering of the measurement pairs.

11. The communication device of claim 10, wherein the weighted filtering comprises weighting the measurement pairs based on the number of already existing measurement pairs whose temperature falls into the temperature window.

12. The communication device of any one of claims 9 to 11, wherein condensing the measurement pairs whose temperature falls into the temperature window to the frequency offset value comprises reducing the impact of outdated measurement pairs on the frequency offset value.

13. The communication device of claim 9, wherein the mathematical regression is a weighted regression wherein each frequency offset value is weighted based on the number of measurement pairs condensed to the frequency offset value.

14. The communication device of any one of claims 1 to 13, further comprising a frequency offset compensator configured to compensate a frequency offset based on the relation between temperature of the oscillator and frequency offset of the reference frequency over the temperature range.

15. A method for determining a frequency offset comprising:
generating a reference frequency by means of an oscillator;
determining a plurality of measurement pairs, each measurement pair representing a temperature of the oscillator and a frequency offset of the reference frequency;
determining a relation between temperature of the oscillator and frequency offset of the reference frequency over a temperature range based on a least one type of mathematical regression, clean-up of outdated measurement pairs, filtering and weighting of measurement pairs according to their statistical importance and maximum likelihood combination of obtained information based on a priori known statistical data.
